# EUROPEAN PATENT APPLICATION

(11) **EP 4 455 402 A1**
(43) Date of publication of application: **30.10.2024**
(21) Application number: 24172075.4
(22) Date of filing: 24.04.2024
(51) Int. Cl.: E01F 8/00, E01F 8/02

(54) **SOUND BERM MADE FROM REUSED COMPOSITE WIND TURBINE BLADES, AND A METHOD FOR MANUFACTURE THEREOF**

(30) Priority: 26.04.2023 SE 2330184
(71) Applicant: Composite Design Sweden AB, 232 35 Arlöv (SE)
(72) Inventor: Wettermark, Fredrik, 216 22 Limhamn (SE)
(74) Representative: Basck Limited

(57) **Abstract**

Disclosed is a sound berm panel (110) arranged to be used to form at least a portion of a sound berm (100) characterized in that the sound berm panel (110) comprises a portion (20) of a composite wind turbine blade (10).

## Description

### TECHNICAL FIELD

The present disclosure relates generally to a sound berm, or a panel therefore, and more particularly to a sound berm comprising reused parts of a composite wind turbine blade, and a method of manufacture of such a sound berm.

### BACKGROUND

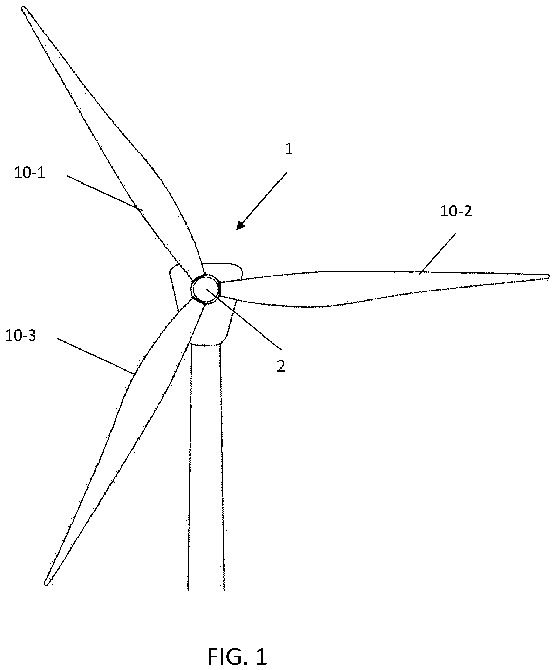

In recent years the development and deployment of alternative energy sources, and in particular wind energy, has undergone an increasing growth, where wind energy is converted to electrical energy in wind turbines. An example of a wind turbine 1 is shown in figure 1. As can be seen, a wind turbine 1 is equipped with a rotor 2 comprising a hub 3 and blades 10. In the example of figure 1, the wind turbine has three blades 10-1, 10-2, 10-3. Such blades are often quite big, with lengths around or exceeding 25 meters. To keep the weight low, these blades 10 are usually made of composite materials such as carbon fiber reinforced plastic (CRP) and/or glassfiber reinforced plastic (GRP).

As with any material, the composite of the blade will degrade over time and they need to be replaced as they are getting older. However, due to the size of the blades 10, the blades 10 are to be replaced well before they have degraded to any substantial degree due to safety precautions. This results in large pieces of composite products that are still robust, but due to the nature of the composite material and the shape of the blades cannot be reused.

Therefore, there exists a need to find suitable use of such wind turbine blades 10.

### SUMMARY

The inventor have realized that the wind turbine blades 10 can be reutilized to form sound berms, also referred to as noise barriers. As a common usage for sound berms is to reduce or block the sound along roads, especially highways or motor ways, the aesthetics of the sound berm is of a lower importance than the provided effect; a reduction of the sound from the traffic.

The teachings herein thus provide a sound berm panel arranged to be used to form at least a portion of a sound berm characterized in that the sound berm panel comprises a portion of a wind turbine blade.

In some embodiments the portion of a wind turbine blade is made of a composite material. In some embodiments the portion of a wind turbine blade comprises carbon fiber reinforced plastic (CRP) and/or glassfiber reinforced plastic (GRP).

In some embodiments the sound berm panel is arranged with a rough surface for enabling vegetation growth. In some embodiments the rough surface comprises netting.

In some embodiments the sound berm panel is arranged to be filled with a filler. In some embodiments the sound berm panel comprises the filler. In some embodiments the filler comprises excavation mass. In some embodiments the filler comprises contaminated excavation or soil mass. In some embodiments the filler comprises tyre chafings.

According to some aspects there is provided a sound berm comprising one or more sound berm panels according to herein.

In some embodiments one or more sound berm panels are arranged side-by-side, wherein a first sound berm panel has a different width than a second sound berm panel arranged adjacent to the first sound berm panel. In some embodiments, the panels are also arranged in multiple rows.

In some embodiments one or more sound berm panels are arranged side-by-side, wherein a first sound berm panel is arranged in a different direction to a second sound berm panel arranged adjacent to the first sound berm panel.

In some embodiments two sound berm panels are arranged with a gap between them.

According to some aspects there is provided a method comprising partitioning a wind turbine blade into one or more portions and reutilize one or more of these portions as sound berm panel(s).

In some embodiments the method further comprises arranging the sound berm panels side-by-side to form a sound berm.

In some embodiments the method further comprises providing the sound berm panel with a filler.

In some embodiments the method further comprises providing the sound berm panel with a rough surface.

Additional aspects, advantages, features and objects of the present disclosure would be made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and details disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:
FIGURE 1 is a schematic illustration of a wind turbine, or rather a part thereof in accordance with the prior art;
FIGURE 2 is a schematic illustration of a wind turbine blade in accordance with an embodiment of the present disclosure;
FIGURE 3A is a schematic illustration of a sound berm in accordance with an embodiment of the present disclosure;
FIGURE 3B is a schematic illustration of a sound berm in accordance with an embodiment of the present disclosure;
FIGURE 3C is a schematic illustration of a sound berm in accordance with an embodiment of the present disclosure;
FIGURE 3D is a schematic illustration of a sound berm in accordance with an embodiment of the present disclosure; and
FIG. 4 is a schematic illustration of a flowchart for a general method in accordance with another embodiment of the present disclosure.

### DETAILED DESCRIPTION OF THE DRAWINGS

Referring to FIGURE 1, there is illustrated therein a schematic representation of a wind turbine 1 comprising a hub and a plurality of blades 10. In this example there is illustrated three blades, but as a skilled person would understand there may be 2, 3, 4, 5 or more blades 10. The wind turbine is beneficially of an industrial size, wherein the blades 10 have a length of 25, 50, 75, 100, 125, 150 meters, or any range there-in-between and at least exceeding 15 meters.

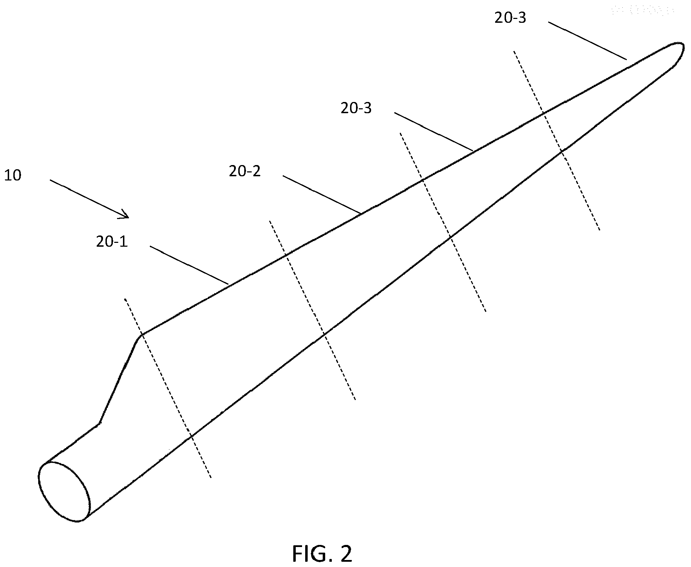

Referring to FIGURE 2, there is illustrated therein a schematic representation of a blade 10. As the inventor have realized, the blade 10 may be cut, split, partitioned or otherwise separated into several portions 20, as is indicated by the dashed lines. The number of portions 20 that a blade 10 is split into will depend on the length of the blade 10 and the desired length of a portion 20. As an example, a 25-meter blade may be split into 4 portions 20, each of 5 meters in length, leaving 5 meters for the base of the blade 10. As a skilled person would understand, the portions 20 may be of a same length or may be of different lengths. A skilled person would also understand that some portions 20 may be of equal length and some portions 20 may be of different lengths. As is also seen in figure 2, the portions 20 will be of different widths due to the shape of the blade 10. As an example, a portion made from a part close to the base may be of 4 meters in width and a portion made from a part close to the end of the blade 10 may be of 1 meter in width.

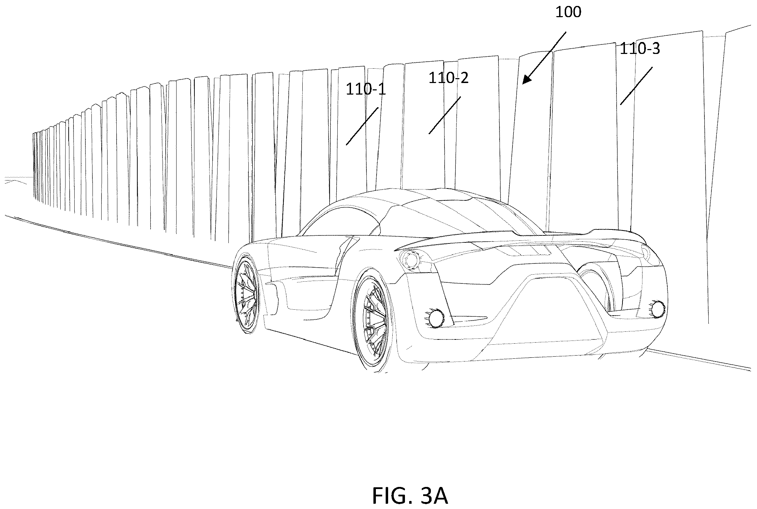

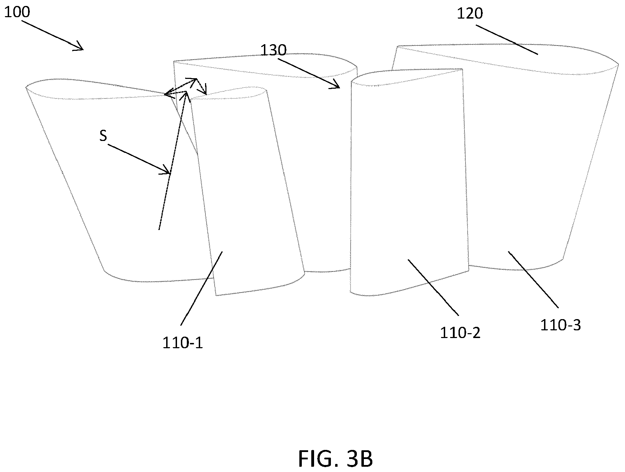

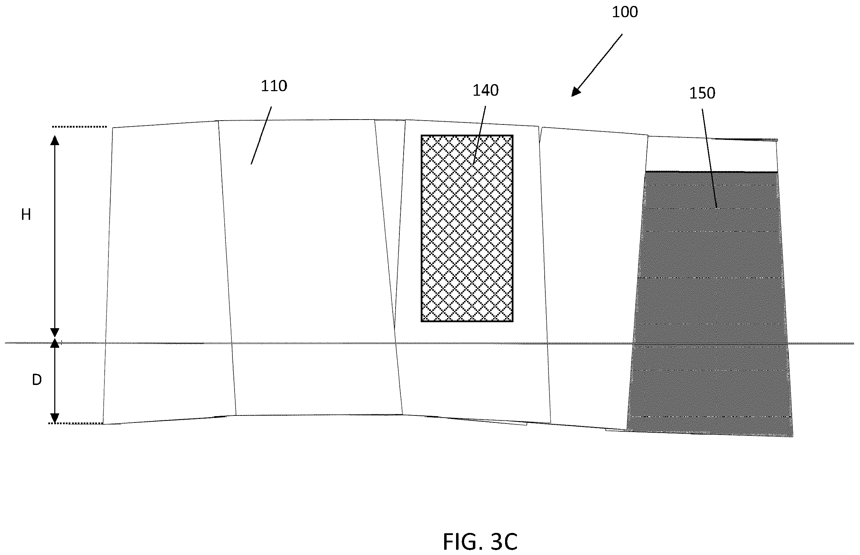

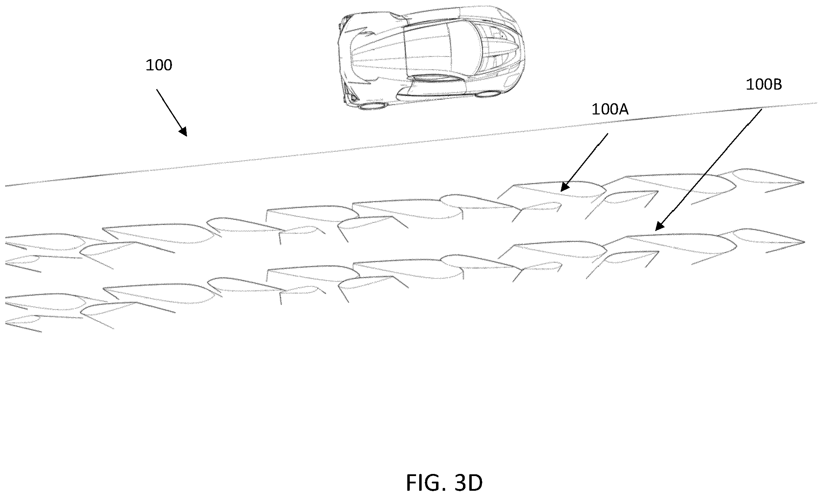

As the inventor also have realized these portions may then be (re)utilized to form panels (referenced 110 in figure 3) for use in a sound berm (referenced 100 in figure 3).

Figure 3 shows a schematic illustration of a sound berm 100 according to embodiments of the teachings herein. The sound berm 100 is formed of several panels 110, where in at least some of the panels 110 are formed or made from portions 20 as discussed in relation to figure 2. The sound berm 100 thus comprises a plurality of panels 110, which are formed or comprises a portion 20 of a wind turbine blade 10, and specifically a wind turbine blade portion 20 made of composite material(s), such as carbon GRP and/or CRP.

Other composite materials include flax fibers or other natural fibers.

As is illustrated the sound berm 100 may be used for a highway or in other traffic environment. A sound berm 100 as per the teachings herein may also, or alternatively be used in an airfield environment (such as along the airfield), a train environment (such as along a railroad track) or other environments where noise is to be cancelled, such as industrial areas.

As the blades 10 are of an asymmetrical form (as regards the blade's lengthwise extension) the portions 20 will also be of differing shapes and not rectangular. This has traditionally been seen as a feature making the portions unsuitable for various constructions. However, the inventor have realized that by arranging panels 110 (made from the portions 20) of different shapes intermittently the panels 110 can be puzzled into a continuous (or substantially continuous) berm - at least from a visual perspective.

Figure 3A shows how panels 110 of different sizes and shapes are intermittently placed or arranged to form the sound berm 100. For example, the panel referenced 110-1 has a different shape than the panel referenced 110-2. Also for example, the panel referenced 110-1 is arranged in a different direction (as regards the airfoil shape of the portion 20) than the panel referenced 110-2. This is also illustrated in figure 3B.

The inventor have thus realized that by arranging the panels 110 intermittently, whereby (at least some) panels 110 of different sizes (widths) are arranged side-by-side, a continuous sound berm 100 is provided.

The inventor have also realized that a further benefit may be provided by such an arrangement if the panels 110 are arranged so that gaps 130 are formed between some panels 110 of the sound berm 100. In some embodiments these gaps 130 are formed by or between two (or more) overlaid panels 110.

Depending on the width of the gap 130, the gap 130 may act as a passage through the sound berm 100 allowing people or animals to pass through the gaps 130 and not be locked-in by the sound berm 100. the sound berm will thus be passable, while still reducing the noise, without having to be arranged with doors or other specific opening.

Furthermore, the inventor have also realized a further benefit of such gaps 130, namely that they will allow for some sound to pass through a portion of the sound berm, only to be reflected back possibly multiple times, thereby increasing the efficiency of the sound berm 100. In figure 3B this is illustrated by the dotted arrow referenced S.

Returning to the arrangement of the panels 110 to form the sound berm 100 as discussed above, figure 3C also shows a schematic illustration of (a portion of) a sound berm 100 as discussed herein. As is illustrated the panels 110 are to be arranged with a first (grounding) portion below ground and second portion above ground.

The first portion may extend to a depth D of 0.5 - 1.5 meters, 1-3 meters or 1.5 meters or deeper, depending on the height of the sound berm. As a skilled person would understand the depth D may vary depending on the height of the sound berm 100, the prevailing or expected winds in the area and other factors that a skilled person would understand. As is also illustrated and as a skilled person would realize the depth may be different for different panels 110, in some cases due to the shape of the panels 110.

In some embodiments the panel 110 may be further supported when raised, by a (concrete) pole or metal railing being driven down through the center or middle of the panel 110, deeper into the ground, when raised.

The second portion may extend to a height H of 3-10 meters, for example 3-5 meters, above ground level. As a skilled person would understand the height H may vary depending on the requirements of the sound berm 100, the prevailing or expected winds in the area and other factors that a skilled person would understand. As is also illustrated and as a skilled person would realize the height may be different for different panels 110, in some cases due to the shape of the panels 110.

That the panels 110 need not be of same dimensions or heights, provides for a further benefit in that a wind turbine blade 10 may be partitioned into the portions 20 also out in the field, thereby avoiding the very expensive transportation of (full-length) wind turbine blades.

The inventor have realized that panels 110 formed of wind turbine blades 10 are hollow, and will thus potentially not act to reduce noise, but will rather act to increase the noise, acting similarly to a sound box. In order to overcome this or to reduce the noise, the inventor are proposing to fill the at least some of the panels 110 with a filler 150. The filler 150 will both reduce the empty space inside the panel 110 reducing the sound box effect, and also - depending on the material chosen - further improve the noise-cancelling effect of the sound berm.

In some embodiments the filler 150 may be formed of or comprise excavating mass and/or soil mass. This provides a reusage of excavation mass. In some embodiments the excavation mass 150 is or comprises the excavation mass being excavated when arranging the panels 110 to the depth D.

In some embodiments the filler 150 is or comprises contaminated excavation and/or soil mass. This provides for a reusage and storage of such contaminated mass.

In some embodiments the filler 150 is or comprises (old tyres) or rather milled or ground pieces of such tyres, hereafter referred to as tyre chafings. This provides for a reusage and storage of such tyres and also provides excellent noise-cancelling capabilities to the sound berm 100.

As a skilled person would understand, two, some or all of these types of filler material may be combined for providing the filler 150. Also, other materials may be added to the filler 150.

In order to provide a more stable grounding, but also to prevent spreading of contaminated mass or tyre chafings outside the panel 110, the panels 110 are to be sealed in one end (preferably the bottom end) by a wall 120 (indicated in figure 3B for the upper end of the panel 110). The wall 120 may be constructed from spillover pieces when partitioning the blade 10. The wall 120 may alternatively be constructed from a composite sheet. The wall 120 may alternatively be constructed from a portion 20 of the blade 10. In some embodiments the wall 120 is fastened to the panel 110 by being glued.

In some embodiments the panel 110 is also covered at the top end by a wall 120 for example to protect from rain or animals from entering the panel 110.

As an alternative or in addition, the inventor have also realized that if the panel 110 is provided with a rough surface 140, the panel 110 will form a surface for vegetational growth. The vegetation will provide for a highly efficient noise cancellation. However, the inventor have also realized that the vegetation may also provide for grounds (such as breeding grounds) for various bugs, such as bees which thrive in wild-flower vegetation. The vegetation will also provide an aesthetic look, forming a natural hedge or barrier over time.

In some embodiments the rough surface 140 is provided through attaching netting to the panel 110. In some embodiments the rough surface 140 is provided through attaching wiring to the panel 110.

In some embodiments a panel 110 may also be utilized as a mount for an antenna, such as a radio frequency antenna for example to be utilized for cellular communication.

Figure 3D shows a schematic illustration of a sound berm 100 comprising more than one row of panels 110. In the example of figure 3D, the panels are arranged in two rows 100A and 100B. This is further beneficial in that it allows for an increased absorption of noise.

The gaps 130 - both between panels in a row and of two rows (i.e. the gap between the rows) also serve to reduce the impact of wind load as some of the wind will be able to escape through the gaps, thereby reducing the load on the sound berm 100.

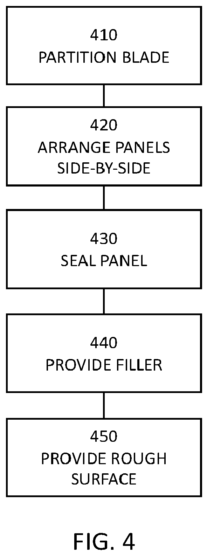

Figure 4 shows a flow chart for a general method according to herein, wherein a wind turbine blade 10 is partitioned 410 into one or more portions 20 to be used as sound berm panels 110. The panels 110 are arranged 420 side-by-side to form a sound berm 100.

In some embodiments the panels 110 - or at least some of them - are filled 440 with a filler 150. In some such embodiments the panels 110 - or at least some of them - are sealed 430 for example by being provided with a (sealing) wall 120.

In some embodiments the panels 110 - or at least some of them - are filled 450 with a rough surface for enabling vegetational growth on the panel 110.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a nonexclusive manner, namely allowing for items, components or elements not explicitly described also to be present. Reference to the singular is also to be construed to relate to the plural.

## Claims

1. A sound berm panel (110) arranged to be used to form at least a portion of a sound berm (100) **characterized in that** the sound berm panel (110) comprises a portion (20) of a wind turbine blade (10), wherein the portion (20) of a wind turbine blade (10) comprises carbon fiber reinforced plastic (CRP) and/or glassfiber reinforced plastic (GRP), and wherein the sound berm panel (110) is filled with a filler (150) comprising excavation mass, contaminated excavation mass, contaminated soil mass, or tyre chafings.

2. A sound berm panel (110) according to claim 1, wherein the sound berm panel is arranged with a rough surface (140) for enabling vegetation growth.

3. A sound berm panel (110) according to claim 2, wherein the rough surface (140) comprises netting.

4. A sound berm panel (110) according to claim 1, wherein the sound berm panel (110) comprises the filler (150).

5. A sound berm (100) comprising one or more sound berm panels (110) according to any preceding claim.

6. A sound berm (100) according to claim 5, wherein at least some of the one or more sound berm panels (110) are arranged side-by-side, wherein a first sound berm panel (110) has a different width than a second sound berm panel (110) arranged adjacent to the first sound berm panel (110).

7. A sound berm (100) according to claim 5 or 6, wherein at least some of the one or more sound berm panels (110) are arranged side-by-side, wherein a first sound berm panel (110) is arranged in a different direction to a second sound berm panel (110) arranged adjacent to the first sound berm panel (110).

8. A sound berm (100) according to claim 5, 6 or 7, wherein at least some of the one or more sound berm panels (110) are arranged in multiple rows.

9. A sound berm (100) according to any of claims 5 to 8, wherein two sound berm panels (110) are arranged with a gap (130) between them.

10. A method for forming a sound berm panel (110), the method comprising partitioning a wind turbine blade (10) into one or more portions (20) and reutilize one or more of these portions as sound berm panel(s) (110), , wherein the portion (20) of a wind turbine blade (10) comprises carbon fiber reinforced plastic (CRP) and/or glassfiber reinforced plastic (GRP) and wherein the method further comprises providing the sound berm panel (110) with a filler (150) comprising excavation mass, contaminated excavation mass, contaminated soil mass, or tyre chafings.

11. The method according to claim 10 further comprising arranging the sound berm panels (110) side-by-side to form a sound berm.

12. The method according to claim 10 or 11 further comprising providing the sound berm panel (110) with a rough surface (140).
